# EUROPEAN PATENT APPLICATION

(11) **EP 0 849 574 A2**
(43) Date of publication of application: **24.06.1998**
(21) Application number: 97309241.4
(22) Date of filing: 18.11.1997
(51) Int. Cl.: G01H 1/14

(54) **Vibration sensors for printer diagnostics**

(30) Priority: 22.11.1996 US 754420
(71) Applicant: XEROX CORPORATION, Rochester, New York 14644 (US)
(72) Inventor: Peeters, Eric, Mountain View, California 94041 (US); Kubby, Joel A., Rochester, NY 14622 (US); Hubble III, Fred F., Rochester, NY 14617 (US); Wallace, Stanley, J., Victor, NY 14564 (US); Werner Jr., Alan J., Rochester, NY 14620 (US); Vitturro, R.Enrique, Rochester, NY 14618 (US)
(74) Representative: Johnson, Reginald George

(57) **Abstract**

A printer system with a vibration sensor for failure detection and prognosis includes an image forming unit such as a xerographic, laser, or ink jet printer module. Multiple vibration sensors are distributed throughout the image forming unit to measure vibration frequencies, permitting improved error diagnostics. To provide a vibration frequency spectrum, each vibration sensor has a substrate (31), a plurality of paired beams (32) extending from the substrate (31), with at least one paired beam sized to have a first resonant frequency mode, and at least one other paired beam sized to have a second resonant frequency mode. Beam movement sensors such as strain gauges (34) are attached to each beam to detect resonant beam oscillation, and a signal analysis unit (36) is electrically connected to the beam movement sensors (34) to provide a digital vibration frequency signature in response to resonant beam oscillation.

## Description

The present invention relates to an apparatus for detecting, analyzing, and reporting mechanical vibrations. More particularly, the present invention relates to a micromechanical vibration sensor capable of determining actual or incipient mechanical faults in printers, including xerographic, laser, or ink jet printers.

Use of vibration sensors for mechanical error detection is widely known. For example, in one automotive application misfiring cylinders in an internal combustion engine can be identified by characteristic low frequency vibration signatures with a combination microcomputer/vibration sensor. After identification of the malfunctioning cylinder, a cylinder knock suppression controller can be used to help limit further cylinder misfires. Other applications that rely on vibration sensors can include monitoring for machine breakage, for machine wear (e.g. predictive maintenance monitoring), or even object or component identification based on vibration signatures.

The vibration sensor used in such systems must generally be reliable, accurate, and have low power requirements. In the past, acoustic microphones have been used to detect vibratory noise. However, due to their relatively low sensitivity and difficulty in localizing vibration sources, acoustic microphones do not provide an optimal solution for vibration detection. More recently, in part because their small size and low power requirements allows attachment directly to potential vibrating components, micromachined or microfabricated vibration sensors have been successfully used for vibration detection. For example, microsensors based on etched semiconductor beams, weighted cantilevers, or movable diaphragms constituting a mass and spring system that transforms spring deflection, compression, or extension into a measurable time domain electrical signal have been constructed. The electrical signal is generated or modulated with the use of coupled piezoresistors, piezoelectric materials, or through capacitance changes. Unfortunately, the vibration frequency bandwidth can be limited in such spring type beam or cantilever devices, often being restricted to measurement below the first resonant frequency due to strong non-linearities in spring response. This problem is particularly acute for high vibration frequencies, resulting in reduced overall sensor effectiveness when a large vibration frequency bandwidth is to be measured.

To partially overcome the problems associated with measuring over a large frequency bandwidth, arrays of cantilevers having differing resonant frequencies can be used. Typically, polysilicon is anisotropically etched to form a comb-like structure of differing length cantilevers attached to a common substrate. Each cantilever has a polycrystalline silicon piezoresistor at its supported end for producing a frequency domain electrical signal in response to vibration at a resonant frequency. Since each cantilever in the array has a slightly different resonant frequency, it is possible to directly obtain a frequency spectrum without incurring any additional microcomputer cost for Fourier transform processing. Using this technique, 50-membered cantilever arrays responsive to 4-14 kiloHertz vibrations have been constructed, as described in Benecke et al., "A Frequency-Selective, Piezoresistive Silicon Vibration Sensor", Recordings of the 3rd International Conference on Solid-State Sensors and Actuators, 1985, pp. 105-108.

Unfortunately, such cantilever array structures are generally supported on a common substrate, allowing sensitivity reducing crosstalk between adjacent or closely spaced cantilevers. Mechanical oscillators will tend to vibrate in response to vibration of other mechanical oscillators attached to the same substrate, even if the resonant frequency is slightly different. In effect, this will reduce sensor sensitivity by broadening the range of detected vibration frequencies.

The present invention minimizes the problem of crosstalk by providing a vibration frequency analyzer having a substrate, generally of silicon or other semiconductive material, and a plurality of paired beams (also of silicon or other suitable material) extending from the substrate. The paired beams are maintained in relatively close proximity, and are attached to the same substrate. When external vibrations induce resonant beam movement, mechanical coupling through the substrate causes the paired beams to vibrate or oscillate in counterphase, since that effectively minimizes overall system energy. Accordingly, vibrational energy radiated by one beam is absorbed by the other resonator, and not transferred to any other beams attached to the same substrate but having slightly different resonant frequencies.

To provide a fine meshed vibration frequency spectrum, a large number of beams having different resonant frequency modes can be used. In the simplest case, the present invention contemplates the use of at least one paired beam sized to have a first resonant frequency mode, and at least one other paired beam sized to have a second resonant frequency mode. These beams can be sized to resonantly vibrate and detect, for example, a high frequency 20 kilohertz vibration signal and a medium frequency 5 kiloHertz vibration signal. For detection of finer gradations between those two signals, intermediate sized beams can be attached to the same substrate. Vibration sensors having 256, 1024, or even more discrete paired beams can be constructed.

Beam resonance is generally detected with beam movement sensors attached to each beam. The beam movement sensors can include piezoresistive elements that change their electrical resistance in response to beam movement. For certain applications, the beam movement sensors provide amplitude information to permit measurement of amplitude of vibrations at selected frequencies. For best results, the beam movement sensors are implanted single crystal piezoresistive strain gauges forming a Wheatstone bridge electrically connected to an on-chip signal analysis unit. This provides a usable digital vibration frequency signature that can be transmitted to a diagnostic computer for further processing.

Various beam construction designs are possible, including use of paired cantilever beams, beams pinned at both ends, and diaphragms (functionally equivalent to beams pinned on all sides). In a preferred embodiment, each beam in each of the plurality of paired beams is a cantilever beam extending outward from the substrate. Each of the these beams has a first and a second attachment to the substrate to form a generally U-shaped structure with a space therein. U-shaped constructions with narrow attachments to the substrate are preferred when low resonant frequencies are to be detected, since a U-shape allows for a large mass, while the narrow attachment provides for a flexible suspension. As an additional advantage, smaller cantilever beams can be attached to the substrate to extend within the space defined by the generally U-shaped structure, reducing overall space requirements while providing a large frequency detection range. For example, a series of sequentially size decreasing U-shaped beams can be nested within a large U-shaped cantilever beam.

In a most preferred embodiment, vibration sensors according to the present invention are components of a novel printer system. By using a vibration sensor in conjunction with a diagnostic computer, the printer system is able to determine prospective and actual failure modes for printer components, including direct vibration inducing elements such as rotating drums or reciprocally moving paper feeders. In certain circumstances, it is possible to use a feedback control unit connected to the diagnostic computer to adjust those malfunctioning or non-optimized vibrating elements of the image forming unit in response to changes in the digital vibration frequency signature. Alternatively, diagnostic information can be stored for later access by authorized service personnel. Advantageously, because of the small size and cost of the vibration sensors in accordance with the present invention, it is possible to use large numbers of sensors distributed throughout the printer system. Information can be transferred to the diagnostic computer by hardwiring, a bus architecture, or even wireless infrared or radio mechanisms. If radiofrequency is used, the vibration sensor can include a wireless transceiver unit that transmits radiofrequency information in response to a radiofrequency interrogation by a signal acquisition module.

The present invention will be described further, by way of examples, with reference to the accompanying drawings, in which:
Figure 1 is a schematic view of printer system having a plurality of vibration sensors distributed throughout the machine, with the sensors constantly or intermittently maintained in wired or wireless contact with a diagnostic computer;
Figure 2 a schematic view of opposing paired cantilever beams suitable for vibration analysis;
Figure 3 is a schematic view of side by side paired cantilever beams moving in counterphase in response to vibration;
Figure 4 is a schematic view of a generally U-shaped cantilever beam for low frequency vibration detection;
Figure 5 is schematic view of a plurality of cantilever beams for vibration analysis;
Figure 6 is schematic view of a plurality of opposed U-shaped cantilever beams for vibration analysis;

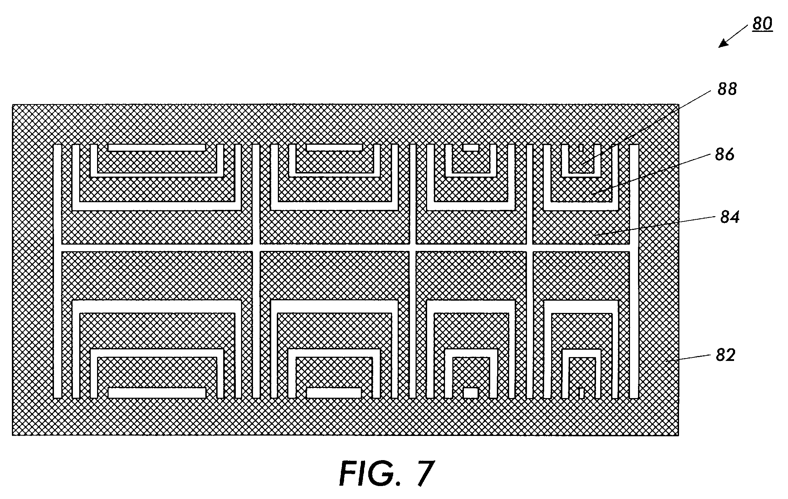

Figure 7 is schematic view of a plurality of nested U-shaped cantilever beams for vibration analysis; and
Figure 8 is a schematic illustration of modules in a vibration sensor.

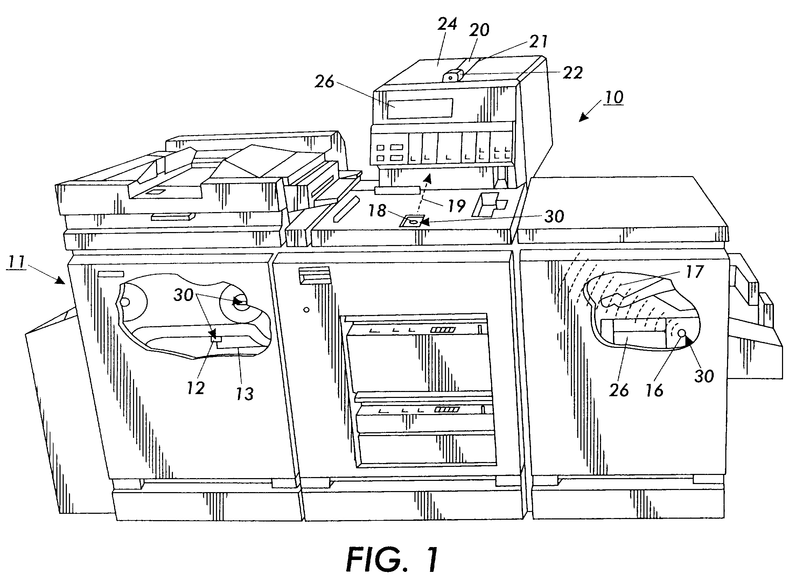

A printer system 10 having an imaging unit 11 with multiple vibration inducing components is illustrated in partially cut away perspective view in Figure 1. Vibration can be induced by movement of belts, rollers, ratchet mechanisms, reciprocating arms, or other conventional moving components of printer systems. The printer system 10 illustrated in the present embodiment is a gray scale xerographic printer with a xerographic imaging unit 11, however, as will be appreciated the present invention can be used in a wide variety of printing systems, including but not limited to thermal ink jet printers, continuous ink jet printers, raster output scanning laser printers, or even offset or lithographic printers.

As shown in Figure 1, the printer system 10 includes multiple vibration sensors 30 distributed through the imaging unit 11 or other portions of the printer system 10. The vibration sensors 30 detect vibrations and transmit signals indicative of the vibration frequency or amplitude to a diagnostic computer 24 and monitor 26. Typically, acoustic frequency vibrations are detected, a vibration frequency spectrum obtained, and this spectrum is compared to known vibration frequency spectra indicative of potential problems by diagnostic computer 24. The diagnostic computer 24 and monitor 26 allows for automatic determination of prospective or actual failure modes, coupled with automatic or user requested service and maintenance. As will be appreciated, in addition to (or instead of) a monitor, remote connections to diagnostic computers in printer service organizations through TCP/IP (internet) protocols or other suitable communication system can be used. Such remote connections would allow service personnel to become aware of prospective failure in the printer even before the customer was aware of the existence of any problem. Alternatively, a diagnostic computer system (either remote or local) allows for the possibility of automatic correction through feedback control mechanisms (e.g. feedback control unit 26). A suitable diagnostic computer system with feedback control that can be adapted for use in the present invention is described in US-A-5,490,089 to Smith et al., assignee Xerox Corporation. As will be appreciated, various password protocols or encryption schemes can be used to limit access to received vibration and diagnostic data only to authorized service personnel.

The sensors 30 providing vibration frequency data to the diagnostic computer 24 can be hardwired to a signal acquisition module 20 connected to the diagnostic computer 24 (e.g. sensor 12 and wire 13 leading to module 20). Alternatively, signal acquisition can be through wireless mechanisms, such as illustrated by near field radio transmissions 17 from sensor 16 to antenna 21, or by infrared transmissions 19 from sensor 18 to infrared transceiver 22. Alternative transmission systems, including bus based electrical systems, optical fiber based systems, acoustic transmission systems, or any other conventional data transfer scheme can also be used. In one embodiment, large numbers of sensors distributed throughout the printer system 10 can both be interrogated by radiofrequency transmissions, with each sensor having a slightly different radiofrequency response. For example, sensors can have an embedded secondary coil that is loosely coupled to a primary coil in the signal acquisition module 20. Using moderate power (e.g. 10 watts input to primary coil), both power and an interrogation signal can be transmitted to the sensors, which respond by measuring vibration and transmitting data to the signal acquisition module. By sweeping through a range of radiofrequencies with the primary coil, all sensors in the system 10 (each having a different radiofrequency response) can be periodically interrogated for vibration data. Alternatively, frequency dependent IR systems or bus based addressable interrogation schemes can of course be used.

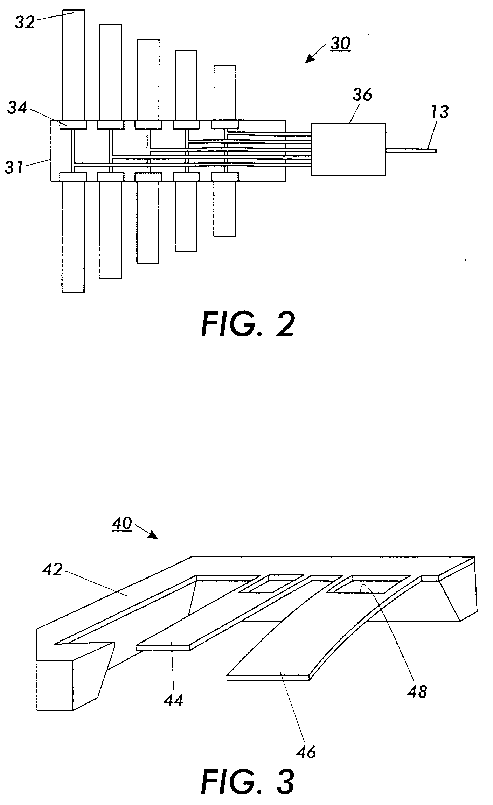

A vibration sensor 30 in accordance with one embodiment of the present invention is schematically illustrated in Figure 2. The vibration sensor 30 includes a substrate 31 to which are attached a plurality of paired cantilever beams 32. The substrate and beams 32 can be formed from a semiconductor wafer having patterned diffusion layers, ion implanted sections, or epitaxial coatings. Suitable semiconductor materials can include but are not limited to pure or appropriately doped (usually by III-V dopants) materials such as silicon, polysilicon, amorphous silicon, germanium, gallium arsenide, germanium arsenide, GaP, CdSe, CdS, ZnS, AlAs, ZnTe, GaP, GaSb, InP, InSb, and numerous other conventional materials known to those skilled in the art.

Because of its wide commercial availability, as well as its highly developed property and process characterization, silicon substrates are preferred for use in the present invention. Typically, the cantilever beams 32 are formed from a layered silicon substrate by masking, etching and undercutting using conventional semiconductor processing techniques. For example, the beams 32 can be batch fabricated by surface etching techniques used in standard integrated circuit (IC) production for defining thin surface patterns in a semiconductor wafer. The etching time can be extended or otherwise suitably modified to sacrificially undercut thin layers of semiconductor materials, creating movable elements such as cantilever beam 32. Alternatively, bulk etching, typically used in IC production when deep trenches or vias must be formed in a wafer using anisotropic etch processes, can be used to precisely machine edges or trenches that surround or define the beams 32. Both surface and bulk etching of wafers can proceed with "wet processing", using chemicals such as potassium hydroxide in solution to remove non-masked material from a wafer. When very high dimensional precision or definition of fine structures in the beam elements is required, an alternative etch processing technique commonly known as "dry etch processing" can be used. Dry etch processing encompasses many gas or plasma phase etching techniques ranging from highly anisotropic sputtering processes that bombard a wafer with high energy atoms or ions to displace wafer atoms into vapor phase (e.g. ion beam milling), to reactive ion etching with an ion containing plasma stream, to somewhat isotropic low energy plasma techniques that direct a plasma stream containing chemically reactive ions against a wafer to induce formation of volatile reaction products.

As indicated in Figure 2, each pair of beams is defined by etching to have a slightly different length, resulting in a slightly different fundamental frequency mode for each pair of beams. Although only five pairs of beams are indicated in Figure 2, as will be appreciated, a large number of beams can having different frequency modes can be used to provide a fine meshed vibration frequency spectrum. For example, vibration sensors having 64, 256, 1024, or even more discrete paired beams can be constructed using conventional silicon batch processing etch techniques as previously discussed.

As can be seen in Figure 2, paired beams of identical length are used to enhance sensor sensitivity by minimizing vibrational crosstalk caused by induction of vibration in adjacent beams. The use of paired beams of identical length allows the respectively paired beams to vibrate or oscillate in counterphase, minimizing overall system energy. This results in vibrational energy radiated by one member of a paired beam to be absorbed by the other member of the pair, and reduces transfer of vibrational energy to those other beams attached to the same substrate, but having slightly different resonant frequencies.

Each beam has an associated sensor to determine resonant beam movement. The sensor can be a piezoresistive strain gauge, a piezoelectric strain gauge, a capacitive transducer, an inductive transducer, or any other suitable transducer for detecting beam movement by providing a measurable electrical or optical signal. For example, in Figure 2 a piezoresistive strain gauge 34 is used to determine resonant beam movement by monitoring beam deformation through non-linear piezoresistive changes in strain gauge resistivity in response to beam movement. Conventional metal or semiconductor strain gauges can be used, with construction from discrete bonded foils (for metal strain gauges), diffusion or ion implanted semiconductors, or thin film deposited semiconductors being contemplated for use in the present invention. Typically, four separate p-type silicon strain gauges, doped through suitable ion implantation or diffusion in a surrounding n-type silicon layer, are arranged on or adjacent to the beams 32. The strain gauges are connected together by metal or highly doped semiconductive electrical connectors to form a Wheatstone bridge. Use of a Wheatstone bridge allows for slight changes in resistance to be accurately detected and measured. Rough measurement of strain amplitude is even possible after suitable calibration and correction for external temperature variations, self-heating, photoconductivity, or other factors known to those skilled in the art.

Each strain gauge 34 is connected to a signal analysis unit 36 that can both provide power to the Wheatstone bridge for measurement of piezoresistive changes and provide some initial data processing related to those piezoresistive changes before data transfer along hardwire 13 to the signal acquisition module 20 of Figure 1. For example, the signal analysis unit 36 can correct for temperature variations, determine vibration amplitude, and provide basic thresholding and signal analysis, with only sustained, periodic signals indicative of resonant beam bending at a minimum amplitude being sent to the signal acquisition module 20. In other embodiments, provision of on-board sensor memory and logic can allow the sensor to determine when vibrations are anomalous, and proactively send data to the signal acquisition module 20 and connected diagnostic computer 24.

Various cantilever beam designs are contemplated for use in the present invention. For example, Figure 3 is a schematic view of a sensor 40 having side by side paired cantilever beams 44 and 46 attached to a substrate 42 and moving in counterphase in response to vibration. Each cantilever beam has an space 48 defined within its body so that attachment of the beams to the substrate is through a pair of narrow legs. This generally U-shaped attachment scheme enhances the flexibility of cantilever beam, and allows for tuning resonant response by varying leg width, as well as beam length and thickness.

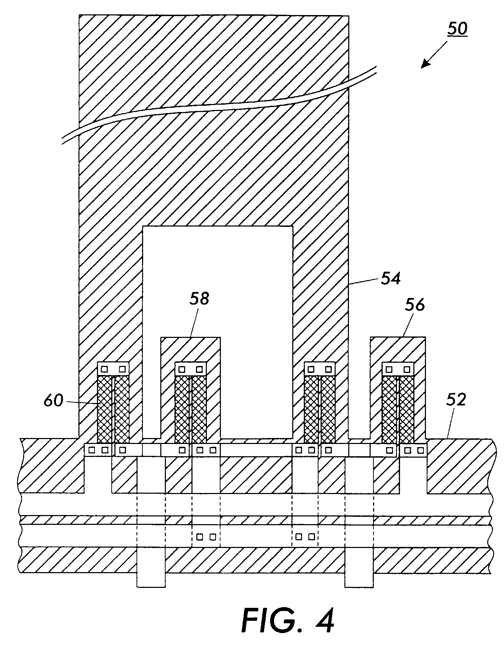

Alternatively, a sensor 50 including an unpaired U-shaped cantilever beam 54 attached to a substrate 52 can be constructed as shown in Figure 4 for low frequency vibration detection. Four piezoresistive strain gauge transducers 60 are connected to form a Wheatstone bridge responsive to bending movement of the beam 54. Two transducers 60 are embedded in the legs of the U-shaped beam 54, while two other transducers are mounted on adjacent tabs 58 and 56. Like the beam 54, the tabs are undercut so that all transducers 60 associated with the beam 54 have substantially the same thermal characteristics. Although not necessary for operation, providing a substantially constant thermal environment improves sensor performance.

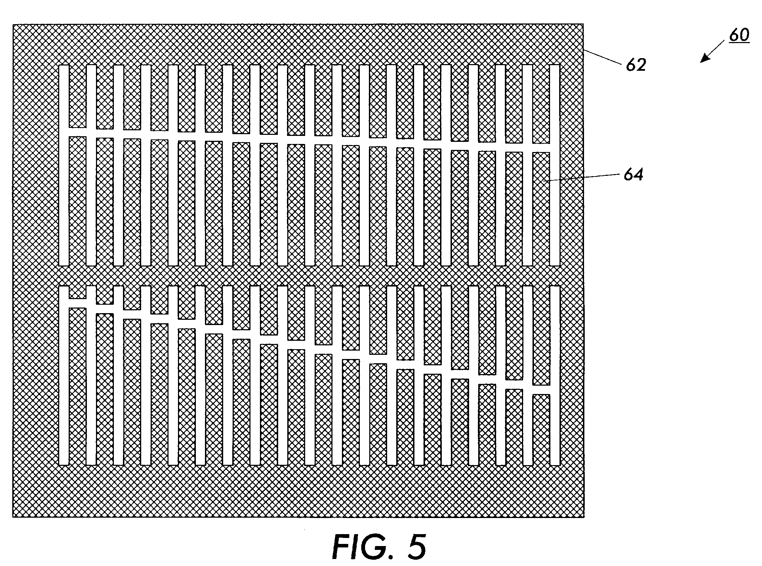

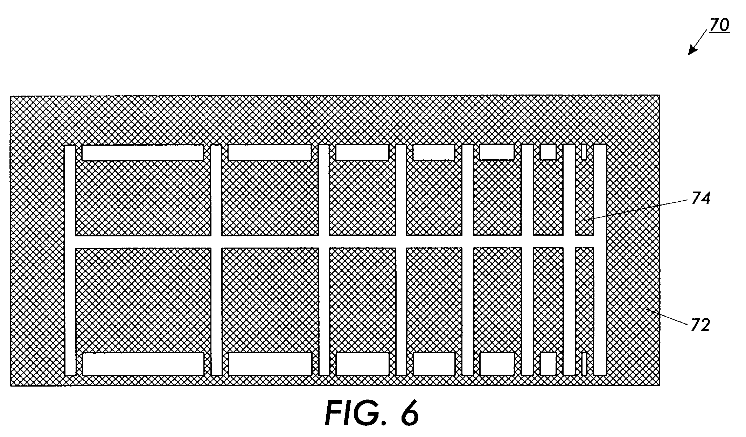

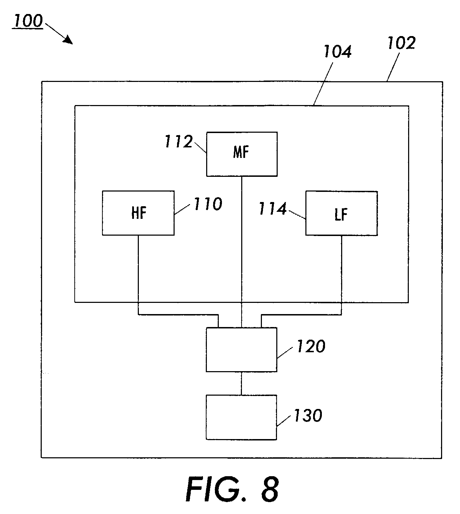

Figure 5 is yet another schematic view of sensor 60 that includes a large in number of cantilever beams 64 attached to a common substrate 62. High beam density is also maintained in the sensor 70 indicated in Figure 6. A plurality of directly opposed U-shaped cantilever beams 74 are attached to a common substrate 72. Similarly, sensor 80 of Figure 8 includes a plurality of directly opposed and nested U-shaped cantilever beams 84, 86, and 88 attached to a common substrate 82.

As will be understood by those skilled in the art, combinations of the foregoing beam arrangements and designs can be arranged in the same sensor, especially when simultaneous high, middle and low frequency vibrations are to be detected. This is schematically illustrated in Figure 8, which shows a sensor 100 on a substrate 102 having a plurality of cantilever beams or other vibrating elements arranged in a high frequency module 110 (typically greater than 10 kHz), a medium frequency module 112 (typically 1 kHz to 10 kHz), and a low frequency module 114 (typically 100 Hz to 1 kHz). The vibrating beams are hermetically sealed in a casing 104, and sensor sensitivity can be tuned by adjusting gas pressures within the casing, with lower pressures making the sensor more responsive. Each module is connected to a signal analysis unit 120 that can both provide power to the measuring transducers (e.g. strain piezoresistors attached to each beam) for measurement of piezoresistive changes and provide some initial data processing related to those piezoresistive changes before data transfer along hardwire 13 to a signal transceiver 130. For example, the signal analysis unit 120 can correct for temperature variations, determine vibration amplitude, and provide basic thresholding and signal analysis. On-board sensor memory and logic can be used to integrate the vibration frequency spectrum derived from the modules 110, 112, and 114, and permit determination of anomalous vibrations. When a mismatch between an expected or historical vibration spectrum and the current vibration spectrum is determined, the transceiver 130 can be activated to send data to a signal acquisition module 20 and connected diagnostic computer 24 such as discussed in connection with Figure 1.

## Claims

1. A vibration frequency sensor (30;40;50;60;70;80) with minimal crosstalk, the analyzer comprising
a plurality of paired beams (32;44,46;64;74;84,86,88) extending from a substrate (31;40;62;72;82), with at least one paired beam sized to have a first resonant frequency mode, and at least one other paired beam sized to have a second resonant frequency mode, with each paired beam oscillatable in counterphase to minimize crosstalk, and
beam movement sensors (34;60) attached to each beam to detect resonant beam oscillation.

2. A vibration frequency sensor as claimed in claim 1, further comprising a hermetically sealable casing attached to the substrate to cover the plurality of paired beams; and/or wherein the beam movement sensors are implanted single crystal piezoresistive strain gauges.

3. A vibration frequency sensor as claimed in claim 1 or claim 2, wherein the beam movement sensors provide amplitude information to permit measurement of amplitude of vibrations at selected frequencies.

4. A vibration frequency sensor as claimed in any of claims 1 to 3, wherein each beam in each of the plurality of paired beams is a cantilever beam extending outward from the substrate; or wherein at least one of each beam in the plurality of paired beams has a first and a second attachment to the substrate to form a generally U-shaped structure with a space therein, and, optionally, wherein one or more beams are attached to the substrate to extend within the space defined by the generally U-shaped structure.

5. A vibration frequency sensor as claimed in any of claims 1 to 4, further comprising a signal analysis unit (36) electrically connected to the beam movement sensors, with the signal analysis unit providing a digital vibration frequency signature in response to resonant beam oscillation; and, optionally, further comprising a wireless transceiver unit connected to the signal analysis unit to allow wireless transmission of the digital vibration frequency signature.

6. A printer system with a vibration sensor for failure detection and prognosis, the printer system comprising
an image forming unit having vibration inducing elements therein,
a vibration sensor attached to the image forming unit to measure vibration frequencies, the vibration sensor having a substrate, a plurality of paired beams extending from the substrate, and with at least one paired beam sized to have a first resonant frequency mode, and at least one other paired beam sized to have a second resonant frequency mode, and beam movement sensors attached to each beam to detect resonant beam oscillation, and
a signal analysis unit electrically connected to the beam movement sensors, with the signal analysis unit providing a digital vibration frequency signature in response to resonant beam oscillation.

7. A printer system as claimed in claim 6, further comprising a wireless transceiver unit connected to the signal analysis unit to allow wireless transmission of the digital vibration frequency signature; and, optionally, wherein the wireless transceiver unit transmits radiofrequency information in response to a radiofrequency interrogation.

8. A printer system as claimed in claim 6 or claim 7, further comprising a diagnostic computer connected to the signal analysis unit to determine prospective and actual failure modes.

9. A printer system as claimed in claim 8, further comprising a feedback control unit connected to the diagnostic computer for adjusting elements of the image forming unit in response to changes in the digital vibration frequency signature.

10. A printer system with a vibration sensor for failure detection and prognosis, the printer system comprising
an image forming unit having vibration inducing elements therein,
a vibration sensor attached to the image forming unit to measure vibration frequencies, the vibration sensor having a substrate, a plurality beams extending from the substrate, and with at least one beam sized to have a first resonant frequency mode, and at least one other beam sized to have a second resonant frequency mode, and beam movement sensors attached to each beam to detect resonant beam oscillation, with each beam movement sensor having a piezoresistive sensing unit.
